Europäisches Patentamt

**European Patent Office**

Office européen des brevets

(11) Veröffentlichungsnummer: **0 245 801**
**A1**

(12) **EUROPÄISCHE PATENTANMELDUNG**

(21) Anmeldenummer: **87106732.8**

(22) Anmeldetag: **08.05.87**

(51) Int. Cl.³: **A 01 D 34/70**

(30) Priorität: **13.05.86 US 862856**

(43) Veröffentlichungstag der Anmeldung:
**19.11.87 Patentblatt 87/47**

(84) Benannte Vertragsstaaten:
**DE FR GB SE**

(71) Anmelder: **DEERE & COMPANY**
**1 John Deere Road**
**Moline Illinois 61265(US)**

(72) Erfinder: **Flenniken, John Michael**
**Box 189 Rural Route 3**
**Beaver Dam Wisconsin 53916(US)**

(72) Erfinder: **Hardzinski, James E.**
**909 Sunset Lane**
**Horicon Wisconsin 53032(US)**

(74) Vertreter: **Feldmann, Bernhard et al,**
**DEERE & COMPANY European Office, Patent Department**
**Steubenstrasse 36-42 Postfach 503**
**D-6800 Mannheim 1(DE)**

(54) **Auffangvorrichtung für einen Schlepper.**

(57) Eine Auffangvorrichtung (30) für einen Gartenschlepper (10) besteht aus zwei L-förmig ausgebildeten Behälteraufnahmeteilen (52), die über eine Tragkrempe an eine Tragvorrichtung (32) hinter dem Fahrersitz und vor den hinteren Laufrädern (14) lösbar angeschlossen sind, um eine bessere Gewichtsverteilung und einen kürzeren Weg zwischen dem Mähwerk (18) und der Auffangvorrichtung zu erhalten.

*Fig. 2*

EP 0 245 801 A1

## Auffangvorrichtung für einen Schlepper

Die Erfindung bezieht sich auf eine Auffangvorrichtung für einen Gartenschlepper mit einem im vorderen Bereich des Schleppers angeordneten Mähwerk, das über eine Austragschute mit der Auffangvorrichtung verbunden ist, die aus zwei Behälteraufnahmeteilen gebildet und über eine eine Gelenkvorrichtung aufweisende Tragvorrichtung an den Schlepper lösbar angeschlossen ist.

Es ist bereits eine Aufsammelvorrichtung für Rasenmäher mit einem hinter den vorderen Laufrädern angeordneten Schneidwerk und einer hinter den hinteren Laufrädern angeordneten Aufsammelvorrichtung bekannt. Das Mähwerk ist über eine Austragschute an den oberen Teil der Auffangvorrichtung angeschlossen. Der Sammelbehälter besteht aus zwei dicht nebeneinander angeordneten Behälteraufnahmeteilen, die über einen oberen Behälterteil miteinander verbunden sind. Eine derartige Anordnung der Auffangvorrichtung eignet sich nicht für einen Gartenschlepper, bei dem das Mähwerk vor den vorderen Laufrädern angeordnet ist, da dann die Austragschute des Mähwerkes relativ lang ausgebildet werden muß, um an die Auffangvorrichtung angeschlossen werden zu können. Relativ lange Austragschuten sind auch deshalb teuer, da diese zusätzlich mit einem Förderelement ausgerüstet werden müssen, um die inneren Widerstände der Austragschute zu überwinden und um das abgeschnittene Gras ohne Verstopfungsgefahr in den Auffangbehälter leiten zu können (US 4 532 755).

Demgegenüber liegt der Erfindung die Aufgabe zugrunde, Mähwerk und Auffangvorrichtung derart auszubilden und anzuordnen, daß bei guter Gewichtsverteilung die Austragschute des Mähwerkes zur Beschickung der Auffangvorrichtung ohne zusätzliche Förderelemente auskommen kann. Diese Aufgabe ist durch die im kennzeichnenden Teil des Anspruches 1 aufgeführten Merkmale gelöst. Durch
die vorteilhafte Plazierung des Mähwerkes vor den Laufrädern ist eine einfache Montage des Mähwerkes auch bei vorhandenen Gartenschleppern ohne weiteres möglich, ohne daß
Umrüstarbeiten am Gartenschlepper vorgenommen werden müssen. Ferner läßt sich durch die Anbringung der Auffangvorrichtung vor den hinteren Laufrädern die Austragschute
zwischen dem Mähwerk und der Auffangvorrichtung sehr klein
halten, so daß ein einwandfreier Transport des abgeschnittenen Erntegutes über die Austragschute gewährleistet wird.
Die getrennte Ausbildung der beiden 1-förmig ausgebildeten
Behälteraufnahmeteile macht es möglich, die gesamte Auffangvorrichtung bereits hinter dem Fahrersitz und vor den hinteren Laufrädern anzuordnen. Ferner ist es möglich, die
beiden 1-förmig ausgebildeten Behälteraufnahmeteile derart
miteinander zu verbinden, daß sie ein nach unten offenes U
bilden, so daß die Behälteraufnahmeteile um das Fahrzeuggehäuse gruppiert werden können. Dabei verläuft die Unterseite
des horizontal verlaufenden Teils des Behälteraufnahmeteils
dicht oberhalb der Oberseite des Fahrzeuggehäuses, während
die innen liegenden Seitenwände der Behälteraufnahmeteile
dicht an den Seitenteilen des Fahrzeuggehäuses entlanglaufen.

Die letzteren und weiteren Merkmale der Erfindung sind
Gegenstand der Unteransprüche.

Im folgenden wird die Erfindung anhand von lediglich einen
Ausführungsweg darstellenden Zeichnungen näher erläutert.
Es zeigen:

Fig. 1     eine Seitenansicht eines Gartenschleppers
           mit einer Mähwerkvorrichtung und einem Auf-
           fangbehälter,

Fig. 2     die Rückansicht des Auffangbehälters gemäß
           Fig. 1.

In der Zeichnung ist mit 10 das Fahrzeug bzw. der Gartenschlepper bezeichnet, der sich auf zwei vordere antreibbare Laufräder 12 und zwei hintere Laufräder 14 abstützt.
Zwei sich nach vorne erstreckende Tragarme 16 sind an der
Stirnseite des Gartenschleppers angeschlossen und mit einem
vor dem Gartenschlepper 10 vorgesehenen Mähwerk 18 verbunden. Das Fahrzeug bzw. der Gartenschlepper 10 weist einen
Fahrersitz 20 auf, der im vorderen Bereich des Fahrzeuggehäuses 22 angeordnet ist. Das Mähwerk 18 ist mit einer Austragöffnung 19 ausgestattet, an die eine Austragschute 24
mit einem Auffangbehälter 30 angeschlossen ist.

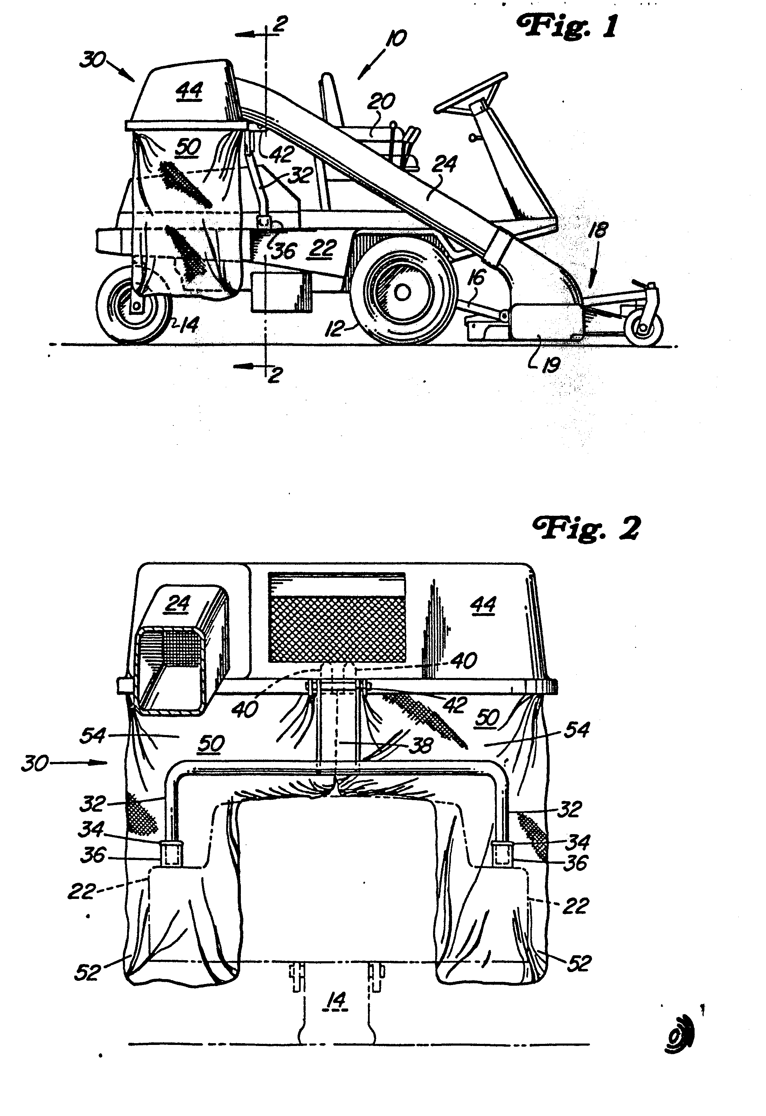

Wie aus Fig. 2 hervorgeht, weist der Auffangbehälter 30
eine Tragvorrichtung 32 auf, die lösbar an das Fahrzeuggehäuse 22 angeschlossen ist. Die Tragvorrichtung 32 besteht aus einem U-Bügel, an dessen beiden Schenkeln je ein
Ring 34 angeordnet ist, dessen Durchmesser größer ist als
der Außendurchmesser des rohrförmigen Teils der Tragvorrichtung 32. Die gegenüberliegenden Enden der u-förmigen
Tragvorrichtung 32 sind in Hülsen 36 aufgenommen und werden von Ringen 34 getragen. Der Mittelteil der Tragvorrichtung 32 trägt eine sich nach oben erstreckende Platte 38. Der oberste Teil der Platte 38 weist zwei sich nach
oben erstreckende Streben 40 auf, die zur Aufnahme von lösbaren, in der Zeichnung jedoch nicht dargestellten Tragkrempen dienen. Eine Gelenkvorrichtung 42 erstreckt sich
von dem oberen Teil der Platte 38 nach vorne und nimmt
einen Deckel 44 auf, der den oberen Teil 50 des Auffangbehälters 30 abdeckt. (Die Tragkrempe 34 und der l-förmig
ausgebildete Teil 50 ist im Detail in der US-PS 4 393 645
dargestellt und beschrieben.) Ein jeder l-förmiger oberer
Teil 50 besteht aus einem unteren, schmäleren Aufnahmeteil
52 und einem sich daran anschließenden oberen Teil 54. Der
obere Teil 50 verläuft horizontal, während der untere Aufnahmeteil 52 vertikal verläuft. Der l-förmige Teil 50 des
Auffangbehälters 30 befindet sich oberhalb der Oberseite des Fahrzeuggehäuses 22 des Gartenschleppers 10. Wie aus Fig. 1 hervorgeht, liegt der 1-förmige Teil 50 über dem mittleren Teil des Gartenschleppers 10 und vor den hinteren Laufrädern 14.

## Patentansprüche

1.  Auffangvorrichtung (30) für einen Schlepper, insbesondere Gartenschlepper (10), mit einem im vorderen Bereich des Schleppers (10) angeordneten Mähwerk (18), das über eine Austragschute (24) mit der Auffangvorrichtung (30) verbunden ist, die aus zwei Behälteraufnahmeteilen gebildet und über eine eine Gelenkvorrichtung (42) aufweisende Tragvorrichtung (32) an den Schlepper (10) lösbar angeschlossen ist, dadurch gekennzeichnet, daß das Mähwerk (18) an der Frontseite des Schleppers (10) und die Tragvorrichtung (32) für die Auffangvorrichtung vor den hinteren Laufrädern (14) des Schleppers (10) angeordnet sind, wobei die Behälteraufnahmeteile (52) beiderseits der vertikalen Seitenwände des Fahrzeuggehäuses (22) und der die Behälteraufnahmeteile (52) verbindende Behälterteil dicht über der Oberseite des Fahrzeuggehäuses (22) ebenfalls vor den hinteren Laufrädern angeordnet sind.

2.  Vorrichtung nach Anspruch 1, dadurch gekennzeichnet, daß der Behälteraufnahmeteil (52) aus einem schmalen Behälterabschnitt und einem breiteren Behälterabschnitt besteht.

3.  Vorrichtung nach Anspruch 2, dadurch gekennzeichnet, daß der Behälteraufnahmeteil (52) L-förmig ausgebildet ist.

4.  Vorrichtung nach den Ansprüchen 1 und 3, dadurch gekennzeichnet, daß die beiden Behälteraufnahmeteile eine u-förmige Auffangvorrichtung (30) bilden.

0245801

Fig. 1

Fig. 2

# 0245801

## EUROPÄISCHER RECHERCHENBERICHT

**Europäisches Patentamt**

EP 87 10 6732

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| P,X | US-A-4 589 249 (WALKER) <br> * Ansprüche 1-8; Zusammenfassung * | 1 | A 01 D 34/70 |
| D,A | US-A-4 532 755 (SCHEMELIN) <br> * Insgesamt * | 1 | |
| A | EP-A-0 144 227 (HONDA) <br> * Insgesamt * | 1 | |
| A | EP-A-0 072 572 (DEERE) <br> * Ansprüche * & US-A-4 393 645 (Kat. D) | 1 | |
| A | US-A-3 987 606 (EVANS) <br> * Spalte 6, Zeilen 11-39; Figur 6 * | 2,3,4 | RECHERCHIERTE SACHGEBIETE (Int Cl 4) |
| A | GB-A- 626 902 (WATSON) <br> * Insgesamt * | 1 | A 01 D |
| A | GB-A- 396 480 (COOPER) | | |
| A | US-A-1 652 363 (KAISER) | | |
| A | FR-A- 397 958 (BENSEL) | | |

Der vorliegende Recherchenbericht wurde für alle Patentansprüche erstellt

| Recherchenort | Abschlußdatum der Recherche | Prüfer |
|---|---|---|
| DEN HAAG | 30-07-1987 | DE LAMEILLIEURE D. |